# NEUE EUROPÄISCHE PATENTSCHRIFT

(11) **EP 2 715 162 B2**
(45) Veröffentlichungstag und Bekanntmachung des Hinweises auf die Entscheidung über den Einspruch: **15.08.2018**
(45) Hinweis auf die Patenterteilung: 13.05.2015
(21) Anmeldenummer: 12722732.0
(22) Anmeldetag: 21.05.2012
(51) Int. Cl.: F16C 19/18, F16C 33/58

(54) **GROßWÄLZLAGER**
LARGE ROLLER BEARING
COURONNE D'ORIENTATION

(30) Priorität: 01.06.2011 DE 102011076872
(43) Veröffentlichungstag der Anmeldung: 09.04.2014
(73) Patentinhaber: Wobben Properties GmbH, 26607 Aurich (DE)
(72) Erfinder: JEPSEN, Torsten, 26603 Aurich (DE)
(74) Vertreter: Eisenführ Speiser
(86) Internationale Anmeldenummer: PCT/EP2012/059342
(87) Internationale Veröffentlichungsnummer: WO 2012/163707

(56) Entgegenhaltungen:
- DD-A5- 46 126
- DE-U1-202006 007 434
- JP-A- 2009 047 206
- US-A1- 2011 085 756

## Beschreibung

Die vorliegende Erfindung betrifft ein Großwälzlager, welches als mehrreihige Kugeldrehverbindung zur Aufnahme von Axiallasten, Radiallasten und Kippmomenten ausgebildet ist, mit einem Außenring, einem Innenring, einer ersten Kugelreihe und einer zweiten Kugelreihe, wobei die erste Kugelreihe und die zweite Kugelreihe axial zueinander beabstandet jeweils in einer Vierpunktlagerung angeordnet sind, wobei der ersten Kugelreihe vier Laufbahnabschnitte und der zweiten Kugelreihe vier Laufbahnabschnitte zugeordnet sind, die jeweils eine Fläche zur Aufnahme der Kugellaufbahn aufweisen.

Großwälzlager werden im Maschinen- und Anlagenbau zum Herstellen einer Drehverbindung bei großen Lasten eingesetzt. Man spricht insbesondere bei Laufkreisdurchmessern von 300 mm und größer von Großwälzlagern. Je nach Einbaubedingung und in Abhängigkeit der aufzunehmenden Kräfte betragen die Laufkreisdurchmesser der Großwälzlager durchaus auch mehrere 1000 mm. Bei Lagern dieser Größenordnung weisen die Großwälzlager selbst ein beträchtliches Eigengewicht auf und erfordern einen beträchtlichen Montageaufwand. Vor diesem Hintergrund wird die Verwendung integrierter Lager angestrebt, welche eine einzige montierbare Einheit aufweisen, die zur Aufnahme von Axialkräften, Radialkräften und gegebenenfalls Kippmomenten eingerichtet sind. Aus diesem Grund werden hauptsächlich Wälzlager in mehrreihiger Bauform eingesetzt, wenn die Aufnahme von Axialkräften, Radialkräften und Kippmomenten gefordert ist. Bekannt ist u.a. der Einsatz mehrreihiger Vierpunktlager.

Konstrukteure sind bei der Auswahl des richtigen Lagers dem Zielkonflikt ausgesetzt, ein Lager mit möglichst hoher Belastbarkeit bei geringstem Einbauraum und möglichst geringem Montageaufwand vorzusehen. In Fällen, wo konstruktionsbedingt ein vorgegebener, begrenzter Bauraum eingehalten werden muss, oder (seltenen) Fällen des Nachrüstens von Großwälzlagern in einer bestehenden Umgebung mit dem Ziel, ein Lager mit höherer Belastbarkeit nachzurüsten (im Vergleich zu dem zuvor dort verbauten), besteht das Problem, dass eine höhere Stabilität mit bekannten Lagertypen nicht ohne Weiteres erreicht wird, ohne in axialer oder radialer Richtung einen größeren Bauraum bereitzustellen, was mit hohem konstruktiven Aufwand verbunden ist.

Als Stand der Technik wird an dieser Stelle allgemein auf folgende Dokumente hingewiesen: DE 10 2008 049 813 A1, DE 10 2004 023 774 A1, DE 10 2004 051 054 A1, DD 46 126 A5, DE 18 55 303 U und DE 10 2006 031 956 A1.

US-A-2011/0085756 zeigt die Merkmale des Oberbegriffs von Anspruch 1.

Vor diesem Hintergrund lag der vorliegenden Erfindung die Aufgabe zu Grunde, ein Großwälzlager der eingangs genannten Art mit verbesserter Lastaufnahme bei möglichst geringen Einbaumaßen bereitzustellen.

Die Erfindung löst die ihr zu Grunde liegende Aufgabe bei einem Großwälzlager der eingangs genannten Art, indem das Großwälzlager nach Anspruch 1 ausgebildet ist, wobei die Fläche jeweils eines in dem Innenring vorgesehenen Laufbahnabschnitts größer als die Fläche des jeweils benachbarten in dem Innenring vorgesehenen Laufbahnabschnitts ist und gleich der Fläche des jeweils diametral gegenüberliegenden in dem Außenring vorgesehenen Laufbahnabschnitts ist. Die Erfindung beruht auf der Erkenntnis, dass die Kugelreihe eines Vierpunktlagers insgesamt vier Berührungspunkte mit jeweils separaten Flächenabschnitten im Innen- und Außenring aufweist. Diese Berührpunkte sind nicht konstant an derselben Stelle - bezogen auf den Querschnitt des Lagers - sondern verändern sich in Abhängigkeit der Lastsituation. Dies gilt auch für den Fall der Lastumkehr. Je größer die auf das Lager wirkende Kraft in axialer Richtung wird, desto stärker verschiebt sich der Berührungspunkt in den belasteten Laufbahnabschnitten in Richtung des Lagerspaltes zwischen dem Innenring und dem Außenring. Dies ist der Tatsache geschuldet, dass die Kugeln und Laufbahnflächen infolge der auftretenden Axialkraft einer Verformung ausgesetzt sind und jeweils mit dem Laufbahnabschnitt einen flächigen Kontakt herstellen. Um eine gewisse Lauftoleranz erzielen zu können, ist bei Vierpunktlagern der Krümmungsradius der Kugeln geringfügig kleiner als der Krümmungsradius der korrespondierenden Laufbahnabschnitte (im Querschnitt). Dies bewirkt, dass beim Auftreten großer Axialkräfte der Innenring und der Außenring eine auseinandertreibende Kraftbeaufschlagung erfahren, wodurch der Kontaktbereich zwischen den jeweiligen Kugeln und der korrespondierenden, belasteten Laufbahnfläche wandern kann. Erfindungsgemäß werden insbesondere diejenigen Flächen der Laufbahnabschnitte vergrößert, welche bei einer Vorzugsbelastung des Großwälzlagers stärker belastet werden. Unabhängig davon, ob es sich bei der Last um eine aufliegende Last oder eine anhebende Last handelt, ist das Lager erfindungsgemäße so auszugestalten, dass die jeweils in Vorzugsrichtung stärker belasteten Flächen der Laufbahnabschnitte vergrößert sind.

Da jeder Laufbahnabschnitt in dem Lager endlich ist, ist bei Erreichen einer kritischen Axiallast ein Punkt erreicht, an welchem der Kontaktbereich zwischen Kugel und Laufbahnfläche (im Sinne von: für die Laufbahn zur Verfügung stehende Fläche) an die Kante der Laufbahnfläche oder darüber hinaus wandert. Infolge dessen werden sowohl die Kugeln als auch die Kanten der Laufbahnabschnitte starkem Verschleiß ausgesetzt.

Auf diesen Erkenntnissen aufbauend macht sich die Erfindung zu Nutze, dass beim Konzipieren der Lagerung bereits bekannt ist, in welche Richtung - axial betrachtet - die Belastung auf das Lager größer sein wird. Das Lager kann also gezielt darauf abgestimmt sein, aus einer axialen Richtung höhere Lasten aufzunehmen als aus der anderen Richtung. Weil auf Grund der Axiallast immer zwei diagonal gegenüberliegende Laufbahnabschnitte stärker belastet werden als die jeweils anderen gegenüberliegenden Laufbahnabschnitte, nutzt die Erfindung die Kenntnis über die Verschiebung des Kontaktbereiches innerhalb der Laufbahnflächen, indem die erwartungsgemäß stärker belasteten Flächen im Vergleich zu den erwartungsgemäß weniger belasteten Flächen vergrößert sind. Der zusätzliche Bauraum, den man in Folge einer Flächenvergrößerung benötigt, kann auf diese Weise dadurch kompensiert werden, dass man die jeweils korrespondierende, geringer belastete Fläche entsprechend der Vergrößerung der einen Fläche verkleinert.

Die Erfindung wird dadurch vorteilhaft weitergebildet, dass die Fläche des in dem Innenring vorgesehenen Laufbahnabschnitts gleich der Fläche des jeweils diametral gegenüberliegenden dem Außenring vorgesehenen Laufbahnabschnitts ist.

Weiter vorzugsweise sind die jeweils größeren Flächen der Laufbahnabschnitte gleich groß. Unter gleich großen Flächen wird vorliegend verstanden, dass unter Berücksichtigung fertigungstechnischer Toleranzen die Länge einer Laufbahnfläche im Querschnitt sich nicht um mehr als +/- 3 % ändern soll.

Wenn wie zuvor oder im Folgenden von Flächen die Rede ist, wird im Allgemeinen die Querschnittsfläche gemeint und nicht die tatsächliche umlaufende Fläche.

In einer ersten beanspruchten Alternative der Erfindung weist der Innenring für die erste Kugelreihe eine ringförmige erste Innenschulter und eine ringförmige zweite Innenschulter auf, welche jeweils eine der Flächen zur Aufnahme einer Kugellaufbahn der ersten Kugelreihe begrenzen. Zusätzlich weist der Innenring für die zweite Kugelreihe eine ringförmige dritte Innenschulter und eine ringförmige vierte Innenschulter auf, welche jeweils eine der Flächen zur Aufnahme der Kugellaufbahn der zweiten Kugelreihe begrenzen, wobei ein maximaler Durchmesser der vierten Innenschulter von einem maximalen Durchmesser der ersten Innenschulter verschieden ist. Durch die Vergrößerung der Durchmesser der Innenschultern in vorstehend genannter Weise ist eine Flächenvergrößerung in geometrisch einfach vorhersehbarer und berechenbarer Weise ermöglicht, ohne die Geometrie des Lagers insgesamt vollständig neu auslegen zu müssen.

In der vorbezeichneten ersten Alternative ist der maximale Durchmesser der dritten Innenschulter von dem maximalen Durchmesser der zweiten Innenschulter verschieden.

In einer zweiten beanspruchten Alternative weist der Außenring alternativ oder zusätzlich für die erste Kugelreihe eine erste ringförmige Außenschulter und eine zweite ringförmige Außenschulter auf, welche jeweils eine der Flächen zur Aufnahme der Kugellaufbahnen der ersten Kugelreihe begrenzen. Der Außenring weist zusätzlich für die zweite Kugelreihe eine dritte ringförmige Außenschulter und eine vierte ringförmige Außenschulter auf, welche jeweils eine der Flächen zur Aufnahme der Kugellaufbahnen der zweiten Kugelreihe begrenzen, wobei der minimale Durchmesser der vierten Außenschulter von dem minimalen Durchmesser der ersten Außenschulter verschieden ist. Der Außenring und die in dem Außenring vorgesehenen Laufbahnabschnitte sind vorzugsweise korrespondierend zu den jeweiligen Abschnitten des Innenrings ausgestaltet, um eine sich symmetrisch ergebene Verschiebung des Kontaktbereichs zwischen den Kugeln und den Flächen der Laufbahnabschnitte sowohl im Innenring als auch im Außenring gleichermaßen zu kompensieren.

In der zweiten beanspruchten Alternative ist der minimale Durchmesser der dritten Außenschulter von dem minimalen Durchmesser der zweiten Außenschulter verschieden.

In einer besonders bevorzugten Ausführungsform der Erfindung ist der größte der maximalen Durchmesser der Innenschultern kleiner oder gleich dem geringsten der minimalen Durchmesser der Außenschultern. Diese Ausführungsform hat den zusätzlichen Vorteil, dass der Innenring trotz einer erfindungsgemäßen Vergrößerung der erwartungsgemäß stärker belasteten Flächen der Laufbahnabschnitte nach wie vor komplett durch den Außenring hindurchsteckbar ist, wodurch die Montage und Demontage des Lagers erheblich vereinfacht ist.

Die Kugeln der ersten Kugelreihe sind in einer bevorzugten Ausführungsform gemeinsam mit den Kugeln der zweiten Kugelreihe entlang eines ersten Laufkreisdurchmessers angeordnet.

Vorzugsweise ist der größte der maximalen Durchmesser der Innenschultern und/oder der geringste der minimalen Durchmesser der Außenschultern gleich oder in einem Bereich von bis zu 0,5 mm unterhalb des ersten Laufkreisdurchmessers der ersten und zweiten Kugelreihe.

Weiter vorzugsweise ist der geringste der minimalen Durchmesser der Außenschultern gleich oder in einem Bereich von bis zu 0,5 mm oberhalb des ersten Laufkreisdurchmessers der ersten und zweiten Kugelreihe.

Gemäß einer vorteilhaften Weiterbildung dieser Ausführungsform ist der maximale Durchmesser der ersten Innenschulter gleich dem maximalen Durchmesser der dritten Innenschulter und größer als der maximale Durchmesser der jeweils zweiten und vierten Innenschulter.

Weiter vorzugsweise ist der minimale Durchmesser der zweiten Außenschulter gleich dem minimalen Durchmesser der vierten Außenschulter und geringer als der minimale Durchmesser der jeweils ersten und dritten Außenschulter.

Gemäß einer alternativen Ausführungsform sind die Kugeln der ersten Kugelreihe entlang des ersten Laufkreisdurchmessers angeordnet, und die Kugeln der zweiten Kugelreihe entlang eines zweiten Laufkreisdurchmessers angeordnet, welcher von dem Durchmesser der ersten Kugelreihe verschieden ist. Hierdurch ergibt sich der Vorteil, dass der mögliche Druckwinkel, also die mögliche Verlagerung der Berührpunkte in Richtung des Spaltes zwischen Innenring- und Außenring des Lagers in einem wesentlich größeren Maße veränderbar ist, als es der Fall wäre, wenn die Kugeln aller Reihen auf einem gleichen Laufkreisdurchmesser angeordnet wären. Das Ausmaß der Steigerung erfolgt in Abhängigkeit der Größe des Versatzes zwischen dem ersten Laufkreisdurchmesser und dem zweiten Laufkreisdurchmesser.

Gemäß dieser alternativen Ausführungsform ist vorzugsweise der maximale Durchmesser der ersten Innenschulter größer als der maximale Durchmesser der zweiten Innenschulter und der maximale Durchmesser der dritten Innenschulter größer als der maximale Durchmesser der vierten Innenschulter.

Weiter vorzugsweise ist der minimale Durchmesser der vierten Außenschulter geringer als der minimale Durchmesser der dritten Außenschulter, und der minimale Durchmesser der zweiten Außenschulter ist geringer als der minimale Durchmesser der ersten Innenschulter.

Gemäß einer weiteren bevorzugten Ausführungsform besteht die erste Kugelreihe aus Kugeln mit einem ersten Kugeldurchmesser und die zweite Kugelreihe besteht aus Kugeln mit einem zweiten Kugeldurchmesser, welcher von dem ersten Kugeldurchmesser verschieden ist.

Gemäß einer weiteren bevorzugten Ausführungsform weist das Großwälzlager eine oder mehrere weitere Kugelreihen auf. Die eine oder mehreren weiteren Kugelreihen sind vorzugsweise entsprechend der ersten Kugelreihe und/oder der zweiten Kugelreihe gemäß den vorstehend erläuterten bevorzugten Ausführungsformen ausgebildet. Dies betrifft insbesondere die Ausgestaltung gegenüberliegender Schultern, Laufbahnabschnitte, Kugeldurchmesser und/oder Laufkreisdurchmesser. Gemäß einer besonders bevorzugten Ausführungsform weist das Großwälzlager eine dritte Kugelreihe auf.

Die Erfindung betrifft weiterhin eine Windenergieanlage mit einem Turm, der einen Turmkopf aufweist und einer Gondel, welche zur Aufnahme eines Rotors eingerichtet ist, wobei die Gondel mittels eines Azimutlagers relativ zu dem Turm drehbar gelagert ist. Die vorstehend genannte Windenergieanlage wird erfindungsgemäß dadurch verbessert, dass das Azimutlager als ein Großwälzlager gemäß einer der vorstehend erläuterten bevorzugten Ausführungsformen beschrieben ist.

Im Folgenden wird die Erfindung anhand zweier bevorzugter Ausführungsbeispiele und unter Bezugnahme auf die beiliegenden Figuren näher beschrieben. Hierbei zeigen:
- Figur 1: eine Detailansicht eines Großwälzlagers gemäß eines ersten Ausführungsbeispiels der Erfindung;
- Figur 2: eine Detailansicht eines Großwälzlagers gemäß einem zweiten Ausführungsbeispiel der vorliegenden Erfindung;
- Figur 3: ein Großwälzlager aus dem Stand der Technik in einem ersten Zustand;
- Figur 4: das Großwälzlager aus Figur 3 in einem zweiten Zustand;
- Figur 5: eine Detailansicht des Großwälzlagers gemäß dem ersten Ausführungsbeispiel in einem ersten Zustand, ähnlich Figur 3; und
- Figur 6: eine Detailansicht des Großwälzlagers gemäß dem ersten Ausführungsbeispiel der Erfindung in einem zweiten Zustand, ähnlich Figur 4.

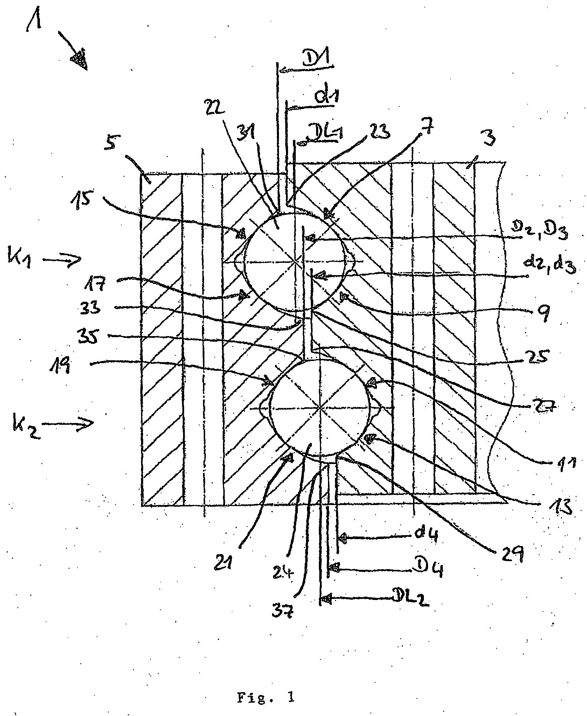

Die nachfolgend näher beschriebenen Figuren erläutern die Erfindung anhand einer beispielhaften Lastsituation. Diese Lastsituation stellt eine aufliegende Last dar, die in - bezogen auf die Figuren 1 bis 6 - vertikaler Richtung von oben auf den Innenring des jeweils abgebildeten Lagers wirkt. Es ist ersichtlich, dass die entsprechende Ausbildung und Nummerierung der Schultern und Kugelreihen in Abhängigkeit vom Lastfall unter Berücksichtigung der Orientierung der Lager in den Figuren umgekehrt werden kann, um einen jeweils anderen Lastfall abzubilden.

In Figur 1 ist eine Querschnittsansicht durch ein erfindungsgemäßes Großwälzlager gemäß einem ersten Ausführungsbeispiel der Erfindung im Detail gezeigt. Das Großwälzlager 1 weist einen Innenring 3 und einen Außenring 5 auf. Das in Figur 1 dargestellte Großwälzlager 1 ist ein zweireihiges Großwälzlager mit einer ersten Kugelreihe K1 und einer zweiten Kugelreihe K2. Die zweite Kugelreihe K2 ist von der ersten Kugelreihe K1 axial beabstandet. Die erste Kugelreihe K1 umfasst eine Vielzahl von Kugeln 22, welche entlang eines Laufkreisdurchmessers DL1 angeordnet sind. Die zweite Kugelreihe K2 umfasst eine Vielzahl von Kugeln 24, welche entlang eines zweiten Laufkreisdurchmessers in DL2 angeordnet sind.

Der Innenring 3 weist einen ersten Laufbahnabschnitt 7 und einen zweiten Laufbahnabschnitt 9 auf, welche der ersten Kugelreihe K1 zugeordnet sind. Zudem weist der Innenring 3 einen dritten Laufbahnabschnitt 11 und einen vierten Laufbahnabschnitt 13 auf, welche der zweiten Kugelreihe K2 zugeordnet sind. Der erste Laufbahnabschnitt 7 und der zweite Laufbahnabschnitt 9 sind benachbart zueinander angeordnet und durch eine umlaufende Ringnut voneinander separiert. Der erste Laufbahnabschnitt 7 ist von einer ringförmigen ersten Innenschulter 23 begrenzt. Der zweite Laufbahnabschnitt 9 ist von einer ringförmigen zweiten Innenschulter 25 begrenzt. Die erste Innenschulter 23 weist einen maximalen Durchmesser d1 auf. Die zweite Innenschulter 25 weist einen zweiten maximalen Durchmesser d2 auf. Der maximale Durchmesser d1 der ersten Innenschulter 23 ist hierbei größer als der maximale Durchmesser d2 der zweiten Innenschulter 25.

Der dritte Laufbahnabschnitt 11 und der vierte Laufbahnabschnitt 13 sind zueinander benachbart in dem Innenring 3 angeordnet und voneinander durch eine umlaufende Ringnut separiert. Der dritte Laufbahnabschnitt 11 ist durch eine ringförmige dritte Innenschulter 27 begrenzt. Der vierte Laufbahnabschnitt 13 ist durch eine ringförmige vierte Innenschulter 29 begrenzt. Die dritte Innenschulter 27 weist einen maximalen Durchmesser d3 auf. In dem in Figur 1 gezeigten Ausführungsbeispiel entspricht der maximale Durchmesser d3 der dritten Innenschulter 27 dem maximalen Durchmesser d2 der zweiten Innenschulter 25. Die vierte Innenschulter 29 weist einen maximalen Durchmesser d4 auf. In dem in Figur 1 gezeigten Ausführungsbeispiel ist der maximale Durchmesser d3 der dritten Innenschulter 27 größer als der maximale Durchmesser d4 der vierten Innenschulter 29.

In dem Außenring 5 sind zu den Innenschultern des Innenrings 3 korrespondierende Außenschultern ausgebildet, welche jeweils einen ebenfalls in dem Außenring 5 vorgesehenen Laufbahnabschnitt begrenzen. Der Außenring 5 weist insbesondere einen ersten Laufbahnabschnitt 15, und einen zweiten Laufbahnabschnitt 17 auf, welche der ersten Kugelreihe K1 zugeordnet sind. Zudem weist der Außenring 5 einen dritten Laufbahnabschnitt 19 und einen vierten Laufbahnabschnitt 21 auf, welcher der zweiten Kugelreihe K2 zugeordnet sind. Der erste Laufbahnabschnitt 15 in dem Außenring 5 ist zu dem - bezogen auf die Kugel 22 - diametral gegenüberliegenden zweiten Laufbahnabschnitt 9 des Innenrings 3 ausgebildet. Der zweite Laufbahnabschnitt 17 in dem Außenring 5 ist zu dem -bezogen auf die Kugel 22 - diametral gegenüberliegenden ersten Laufbahnabschnitts 7 des Innenrings 3 korrespondierend ausgebildet.

Der dritte Laufbahnabschnitt 19 in dem Außenring 5 ist zu dem - bezogen auf die Kugel 24 - diametral gegenüberliegenden vierten Laufbahnabschnitt 13 in dem Innenring 3 korrespondierend ausgebildet. Der vierte Laufbahnabschnitt 21 in dem Außenring 5 ist zu dem - bezogen auf die Kugel 24 - diametral gegenüberliegenden dritten Laufbahnabschnitt 11 in dem Innenring 3 korrespondierend ausgebildet.

Der erste Laufbahnabschnitt 15 ist durch eine erste ringförmige Außenschulter 31 begrenzt, welche einen minimalen Durchmesser D1 aufweist. Der zweite Laufbahnabschnitt 17 ist durch eine zweite ringförmige Außenschulter 33 begrenzt, welche einen minimalen Durchmesser von D2 aufweist. Der dritte Laufbahnabschnitt 19 ist durch eine dritte ringförmige Außenschulter 35 begrenzt, welche einen minimalen Durchmesser D3 aufweist. Der vierte Laufbahnabschnitt 21 ist durch eine ringförmige vierte Außenschulter 37 begrenzt, welche einen minimalen Durchmesser D4 aufweist.

Die Kugeln 22 der ersten Kugelreihe K1 sind entlang eines ersten Laufkreisdurchmessers DL1 angeordnet. Die Kugeln 24 der zweiten Kugelreihe K2 sind entlang eines zweiten Laufkreisdurchmessers DL2 angeordnet. DL1 ist gemäß Figur 1 größer als DL2.

Die Fläche des ersten Laufbahnabschnitts 7 des Innenrings 3 ist vergrößert, indem der Durchmesser d1 der ersten Innenschulter 23 größer ist als der Durchmesser d2 der zweiten Innenschulter 25.

Gemäß Figur 1 ist d1 ebenfalls größer als DL1. Die Fläche des zweiten Laufbahnabschnitts 17 des Außenrings ist korrespondierend zu der Fläche des ersten Laufbahnabschnitts 7 des Innenrings 3 vergrößert, indem der Durchmesser D2 geringer ist als der Durchmesser D1 der ersten Außenschulter 31. Der Durchmesser D2 der zweiten Außenschulter 33 ist um das gleiche Maß geringer als der erste Laufkreisdurchmesser DL1, wie der Durchmesser d1 der ersten Innenschulter 23 größer ist als DL1.

In analoger Weise zur ersten Kugelreihe K1 sind auch die Laufbahnabschnitte der zweiten Kugelreihe K2 ausgebildet. Der dritte Laufbahnabschnitt 11 weist eine vergrößerte Fläche auf, die genau so groß ist wie die Fläche des vierten Laufbahnabschnitts 21 des Außenrings 5. Der Durchmesser d3 der dritten Innenschulter 27 ist um den gleichen Betrag größer als der Laufkreisdurchmesser DL2 der zweiten Kugelreihe K2, wie der Durchmesser D4 der vierten Außenschulter 37 des vierten Laufbahnabschnitts 21 des Außenrings 5 geringer ist als der zweite Laufkreisdurchmesser DL2. Die bezogen auf die Kugeln 24 diametral gegenüberliegenden Laufbahnabschnitte 13 und 19 des Innenrings 3 bzw. Außenrings 5 sind in gleicher Weise relativ zu den Laufbahnabschnitten 11 und 21 verkleinert, wie vorstehend bereits in Bezug auf die erste Kugelreihe K1 und die Laufbahnabschnitte 9 und 15 erörtert wurde.

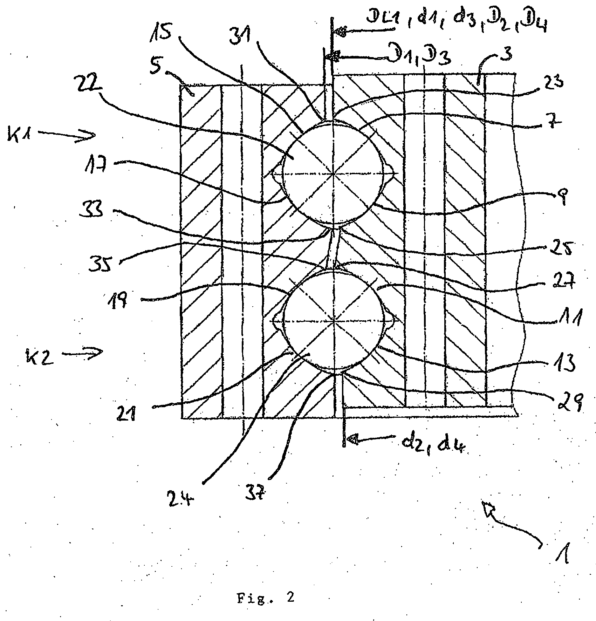

Figur 2 zeigt ein Großwälzlager 1 der vorliegenden Erfindung nach einem zweiten Ausführungsbeispiel. Das Großwälzlager 1 gemäß Figur 2 ähnelt in seiner Struktur dem Großwälzlager 1 gemäß Figur 1 im Hinblick auf die Anordnung der ersten Kugelreihe K1 und zweiten Kugelreihe K2. In Bezug auf die Innenschultern, die von ihnen begrenzten Laufbahnabschnitte, die Außenschultern und die von diesen begrenzten Laufbahnabschnitte wird insoweit auf die Erläuterungen zu Figur 1 verwiesen, soweit identische Bezugszeichen vergeben wurden.

Die Ausführungsbeispiele der Figuren 1 und 2 unterscheiden sich allerdings im Hinblick auf die Dimensionierung der Schultern. Der Innenring 3 gemäß Figur 2 ist insbesondere wie folgt ausgestaltet:
Die erste Innenschulter 23 des Innenrings 3 weist einen maximalen Durchmesser d1 auf, welcher gleich dem Laufkreisdurchmesser DL1 der ersten Kugelreihe K1 ist. Der minimale Durchmesser D1 der ersten Außenschulter 31 des Außenrings 5 hingegen ist größer als der Laufkreisdurchmesser DL1 der ersten Kugelreihe K1. Die zweite Innenschulter 25 des Innenrings 3 weist einen maximalen Durchmesser d2 auf, welcher geringer ist als der Laufkreisdurchmesser DL1 der ersten Kugelreihe K1. Der korrespondierende minimale Durchmesser D2 in dem Außenring 5 der zweiten Außenschulter 33 weist einen minimalen Durchmesser D2 auf, welcher gleich dem Laufkreisdurchmesser DL1 der ersten Kugelreihe K1 ist.

Der maximale Durchmesser d3 der dritten Innenschulter 27 in dem Innenring 3 ist gleich dem maximalen Durchmesser d1 der ersten Innenschulter 23 der ersten Kugelreihe K1 ist. Der Laufkreisdurchmesser DL1 der ersten Kugelreihe K1 entspricht gemäß dem in Figur 2 gezeigten Ausführungsbeispiel auch dem Laufkreisdurchmesser der zweiten Kugelreihe K2. Im Unterschied zu Figur 1 sind also die beiden Kugelreihen K1 und K2 auf einem gleichen Laufkreisdurchmesser DL1 angeordnet und axial zueinander beabstandet. Der minimale Durchmesser D3 der dritten Außenschulter 35 in dem Außenring 5 ist wiederum größer als der Laufkreisdurchmesser DL1. D3 ist gleich D1.

Der maximale Durchmesser d4 der vierten Innenschulter 29 des Innerings 3 ist gleich dem Durchmesser d2 der zweiten Innenschulter 25. Der korrespondierende minimale Durchmesser D4 der vierten Außenschulter 37 des Außenrings 5 ist gleich dem minimalen Durchmesser D2 der zweiten Außenschulter 33.

Bei dem Ausführungsbeispiel gemäß Figur 2 dient der Laufkreisdurchmesser DL1 als Referenzgröße. Zwischen dem Außenring und dem Innenring ist jeweils ein Spalt ausgebildet, welcher um den gleichen Betrag in Richtung des Außenrings oder Innenrings variiert, wodurch einander diametral gegenüberliegende (bezogen auf die jeweilige Kugelreihe K1, K2) gleichmäßig vergrößerte und verkleinerte Laufbahnabschnitte ausgebildet sind. Zugleich ist der Innenring 3 nach Entfernen der Kugeln 22, 24 bzw. vor dem Einführen der Kugeln 22, 24 vollständig durch den Außenring 3 hindurchsteckbar, weil es zu keiner Überschneidung kommt.

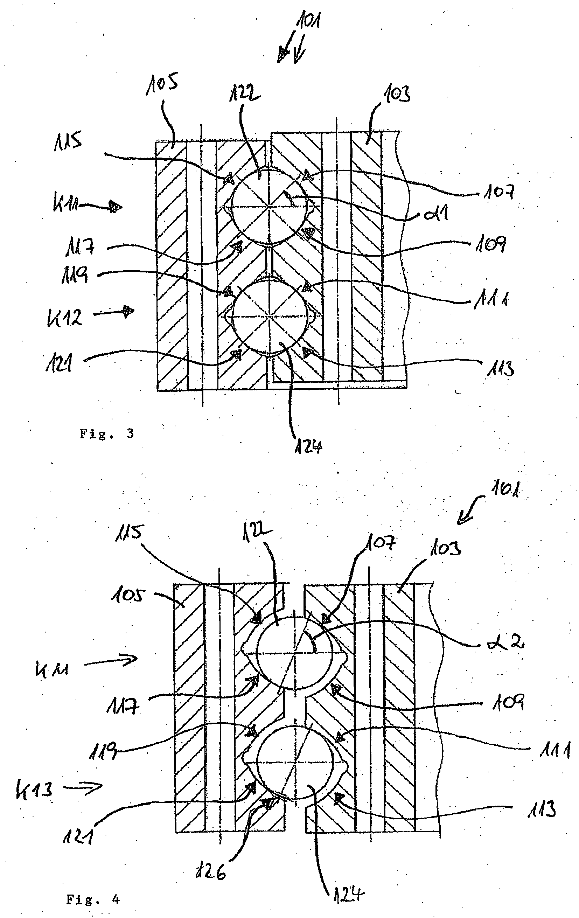

Anhand der Figuren 3 bis 6 soll die Funktionsweise eines erfindungsgemäßen Großwälzlagers 1 im Vergleich zu einem Großwälzlager 101 aus dem Stand der Technik veranschaulicht werden. Figuren 3 und 4 zeigen zunächst ein Großwälzlager 101 aus dem Stand der Technik. Das Großwälzlager 101 weist einen Innenring 103 und einen Außenring 105 auf. Zwischen dem Innenring 103 und dem Außenring 105 sind zwei Kugelreihen K11 und K12 angeordnet. Das Großwälzlager 101 aus dem Stand der Technik ist ein zweireihiges Vierpunktlager. Die Kugeln der ersten Kugelreihe K11 weisen jeweils zwei Berührungspunkte mit dem Innenring 103 und dem Außenring 105 auf. Die Berührungspunkte sind jeweils in einen separaten Laufbahnabschnitt 107, 109, 115 und 117 angeordnet. Relativ zu einer radialen Achse ist Druckwinkel α1 ausgebildet. Für die zweite Kugelreihe K12 gilt in Bezug auf die Laufbahnabschnitte 111, 113, 119 und 121 das Gleiche wie für die erste Kugelreihe K11. Die Flächen der Laufbahnabschnitt 107, 109, 111, 113, 115, 117, 119 und 121 sind jeweils im Wesentlichen gleich groß.

Figur 4 zeigt das Lager aus Figur 3, wenn eine große aufliegende Axiallast über den Innenring eingeleitet wird und auf das Lager wirkt. Der Innenring 103 wird gegen den Außenring 105 nach unten gedrückt. Aufgrund der Anstellung der Kugeln der ersten Kugelreihe K11 und der zweiten Kugelreihe K12 gegen die Flächen der Laufbahnabschnitte werden der Innenring 103 und der Außenring 105 auseinandergetrieben, was in Figur 4 überzeichnet dargestellt ist. In Folge dieser Relativbewegung zwischen dem Innenring und dem Außenring und einer zusätzlichen Deformierung der Kugeln 122, 124 kommt es zu einer Erhöhung des Druckwinkels α, welcher nun den Wert α2 einnimmt. Auf Grund der Verformung der Kugeln und Laufbahnflächen ist die punktförmige Berührung einer Kugel zu der sie berührenden Fläche des Laufbahnabschnitts zu einer Fläche vergrößert, was in Bezug auf die zweite Kugelreihe K12 durch die Ellipse 126 angedeutet ist. Dieser Verformungsbereich befindet sich gemäß Darstellung aus Figur 4 im Bereich einer Kante, die den Laufbahnabschnitt 121 begrenzt. Das gleiche Phänomen zeigt sich aufgrund der symmetrischen Ausbildung des Lagers auch in Bezug auf die übrigen, stark belasteten Laufbahnabschnitte 111, 107 und 117. Es tritt starker Verschleiß auf, sowohl auf Seiten der Kugeln als auch auf Seiten der Laufbahnabschnitte.

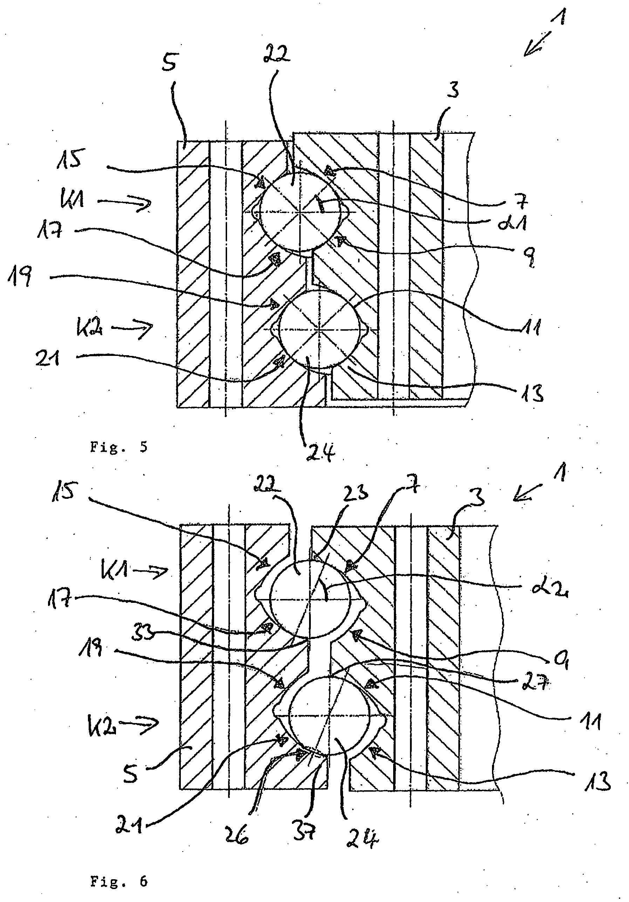

In Abgrenzung zu den Figuren 3 und 4 zeigen die Figuren 5 und 6 die verbesserte Funktion des Großwälzlagers gemäß der vorliegenden Erfindung. Die in den Figuren 5 und 6 gezeigte Funktionsweise gilt für beide Ausführungsbeispiele der vorliegenden Erfindung, der Einfachheit halber wird allerdings lediglich auf das erste Ausführungsbeispiel der Erfindung Bezug genommen, welches auch in Figur 1 bereits gezeigt und erläutert ist. In Figur 5 ist das Großwälzlager aus Figur 1 in einem im Wesentlichen unbelasteten Zustand dargestellt. Die Berührungspunkte der Kugeln 22, 24 der ersten und zweiten Kugelreihe K1, K2 sind im Wesentlichen in einem Winkel von α1 zur Radialrichtung des Lagers bezogen auf den Mittelpunkt der Kugeln ausgerichtet. In dem in Figur 6 gezeigten Zustand lastet eine Axiallast auf dem Innenring, die in der gezeigten Orientierung in Figur 6 nach unten wirkt. Aufgrund der Anstellung der Kugeln 22, 24 der ersten Kugelreihe K1 und der zweiten Kugelreihe K2 gegen die Flächen der Laufbahnabschnitte werden der Innenring 3 und der Außenring 5 auseinandergetrieben. Infolgedessen verlagert sich der Kontakt der Kugeln 22, 24 mit den jeweiligen Laufbahnabschnitten. Eine aufgrund der Deformierung der Kugeln und Laufbahnflächen ausgebildete Kontaktfläche, dargestellt durch Ellipse 26, ist in Richtung der Innenschultern 23, 27 des Innenrings 3 und der Außenschultern 33, 37 des Außenrings 5 verlagert. Die Fläche der Laufbahnabschnitte 9, 15 der ersten Kugelreihe K1 und die Fläche der Laufbahnabschnitte 13, 19 der zweiten Kugelreihe K2 sind im Wesentlichen unbelastet, jedenfalls aber deutlich weniger stark belastet als die vorstehenden genannten Flächen der Laufbahnabschnitte, 7, 11, 17, 21. Allerdings befindet sich die Ellipse 26 auf Grund der erfindungsgemäß vergrößerten Fläche der Laufbahnabschnitte 7, 17, 11 und 21 trotz der starken Axiallast nicht in dem Bereich der ringförmigen Schultern 23, 33, 27, 37. Folglich tritt kein Verschleiß der Kugeln und/oder Laufbahnabschnitte des Innenrings 3 und Außenrings 5 auf. Bei ähnlicher Lastsituation und ähnlicher Druckwinkelverlagerung wie bei aus dem Stand der Technik bekannten Lagern (siehe Figur 3, 4) ist bei dem erfindungsgemäßen Lager noch kein kritischer Betriebszustand erreicht.

Die vorliegenden Ausführungen zu bevorzugten Ausführungsformen und die vorstehende Figurenbeschreibung beziehen sich auf zweireihige Lager. Die Erfindung betrifft darüberhinaus jedoch zusätzlich auch weitere, mehrreihige Ausführungsformen des Großwälzlagers gemäß der vorliegenden Erfindung. Insbesondere betrifft die Erfindung ein dreireihiges Großwälzlager, welches eine dritte Kugelreihe aufweist. Die dritte Kugelreihe ist zwischen dem Innenring und dem Außenring in einer Vierpunktlagerung angeordnet, wobei die dritte Kugelreihe zu der ersten Kugelreihe und der zweiten Kugelreihe axial beabstandet ist, wobei der dritten Kugelreihe vier Laufbahnabschnitte zugeordnet sind, die jeweils eine Fläche zur Aufnahme der Kugellaufbahn aufweisen, und wobei die Fläche jeweils eines in dem Innenring vorgesehenen Laufbahnabschnitts der dritten Kugelreihe größer ist als die Fläche des jeweils benachbarten in dem Innenring vorgesehenen Laufbahnabschnitts der dritten Kugelreihe und gleich der Fläche des jeweils diametral gegenüberliegenden in dem Außenring vorgesehenen Laufbahnabschnitts der dritten Kugelreihe ist.

Bevorzugte Ausführungsformen, die vorstehend unter Bezugnahme auf zweireihige Ausführungen des Großwälzlagers geschildert wurden, sind in analoger Weise auch auf die dreireihige Ausführung des Großwälzlagers zu übertragen.

Bevorzugte Ausführungsformen der vorliegenden Erfindung werden bevorzugt mittels weiterer konstruktiver Details an verschiedene Einsatzebereiche angepasst. So können die erfindungsgemäßen Großwälzlager beispielsweise eine Innenverzahnung, Außenverzahnung oder gar keine Verzahnung aufweisen. Die Großwälzlager können durchgehende, sich axial erstreckende Befestigungsbohrungen oder andere, flanschartige oder radiale Befestigungsbohrungen aufweisen. Weiterhin weisen die erfindungsgemäßen Lager vorzugsweise Abstandshalter zwischen den Kugeln auf, oder Käfige zum Halten der Kugeln. Gemäß weiterer bevorzugter Ausführungsformen verfügen die Großwälzlager gemäß der Erfindung über Schmierbohrungen zum Einfüllen und Auspressen von Schmiermitteln, oder etwa Öffnungen zum Einfüllen oder Entfernen der Kugeln aus den Kugelreihen.

## Patentansprüche

1. Großwälzlager (1), welches als mehrreihige Kugeldrehverbindung zur Aufnahme von Axiallasten, Radiallasten und Kippmomenten ausgebildet ist, mit einem Außenring (5), einem Innenring (3), einer ersten Kugelreihe (K1) und einer zweiten Kugelreihe (K2), wobei die erste Kugelreihe (K1) und die zweite Kugelreihe (K2) axial zueinander beabstandet jeweils in einer Vierpunktlagerung angeordnet sind, wobei der ersten Kugelreihe vier Laufbahnabschnitte (7, 9, 15, 17) und der zweiten Kugelreihe vier Laufbahnabschnitte (11, 13, 19, 21) zugeordnet sind, die jeweils eine Fläche zur Aufnahme der Kugellaufbahn aufweisen,
wobei die Fläche jeweils eines in dem Innenring vorgesehenen Laufbahnabschnitts (7, 11) größer als die Fläche des jeweils benachbarten, in dem Innenring vorgesehenen Laufbahnabschnitts (9, 13) ist und gleich der Fläche des jeweils diametral gegenüberliegenden in dem Außenring vorgesehenen Laufbahnabschnitts (17, 21) ist;
- der Innenring (3) für die erste Kugelreihe (K1) eine ringförmige erste Innenschulter (23) und eine ringförmige zweite Innenschulter (25) aufweist, welche jeweils eine der Flächen zur Aufnahme einer Kugellaufbahn der ersten Kugelreihe (K1) begrenzen, der Innenring (3) für die zweite Kugelreihe (K2) eine ringförmige dritte Innenschulter (27) und eine ringförmige vierte Innenschulter (29) aufweist, welche jeweils eine der Flächen zur Aufnahme der Kugellaufbahn der zweiten Kugelreihe (K2) begrenzen, wobei ein maximaler Durchmesser (d4) der vierten Innenschulter (29) von einem maximalen Durchmesser (d1) der ersten Innenschulter (23) verschieden ist,
**dadurch gekennzeichnet, dass** der maximale Durchmesser (d3) der dritten Innenschulter (27) von dem maximalen Durchmesser (d2) der zweiten Innenschulter (25) verschieden ist, und/oder
- der Außenring (5) für die erste Kugelreihe (K1) eine erste ringförmige Außenschulter (31) und eine zweite ringförmige Außenschulter (33) aufweist, welche jeweils eine der Flächen zur Aufnahme der Kugellaufbahnen der ersten Kugelreihe (K1) begrenzen, der Außenring (5) für die zweite Kugelreihe (K2) eine dritte ringförmige Außenschulter (35) und eine vierte ringförmige Außenschulter (37) aufweist, welche jeweils eine der Flächen zur Aufnahme der Kugellaufbahnen der zweiten Kugelreihe (K2) begrenzen, wobei der minimale Durchmesser (D4) der vierten Außenschulter (37) von dem minimalen Durchmesser (D1) der ersten Außenschulter (31) verschieden ist,
**dadurch gekennzeichnet, dass** der minimale Durchmesser (D3) der dritten Außenschulter (35) von dem minimalen Durchmesser (D2) der zweiten Außenschulter (33) verschieden ist.

2. Großwälzlager (1) nach Anspruch 1,
**dadurch gekennzeichnet, dass** die Fläche des in dem Innenring (3) vorgesehenen Laufbahnabschnitts (9, 13) gleich der Fläche des jeweils diametral gegenüberliegenden in dem Außenring (5) vorgesehenen Laufbahnabschnitts (15, 19) ist.

3. Großwälzlager (1) nach einem der vorstehenden Ansprüche,
**dadurch gekennzeichnet, dass** der größte der maximalen Durchmesser (d1, d2, d3, d4) der Innenschultern (23, 25, 27, 29) kleiner oder gleich dem geringsten der minimalen Durchmesser (D1, D2, D3, D4) der Außenschultern (31, 33, 35, 37) ist.

4. Großwälzlager (1) nach einem der vorstehenden Ansprüche,
**dadurch gekennzeichnet, dass** die Kugeln (23) der ersten Kugelreihe (K1) und die Kugeln (24) der zweiten Kugelreihe (K2) entlang eines ersten Laufkreisdurchmessers (DL1) angeordnet sind.

5. Großwälzlager (1) nach Anspruch 4,
**dadurch gekennzeichnet, dass** der größte der maximalen Durchmesser (d1, d2, d3, d4) der Innenschultern (23, 25, 27, 29) gleich oder in einem Bereich von bis zu 0,5 mm unterhalb des ersten Laufkreisdurchmessers (DL1) der ersten und zweiten Kugelreihe ist.

6. Großwälzlager (1) nach Anspruch 4 oder 5,
**dadurch gekennzeichnet, dass** der geringste der minimalen Durchmesser (D1, D2, D3, D4) der Außenschultern (31, 33, 35, 37) gleich oder in einem Bereich von bis zu 0,5 mm oberhalb des ersten Laufkreisdurchmesser (DL1) der ersten und zweiten Kugelreihe ist.

7. Großwälzlager (1) nach Anspruch 5 oder 6,
**dadurch gekennzeichnet, dass** der maximale Durchmesser (d1) der ersten Innenschulter (23) gleich dem maximalen Durchmesser (d3) der dritten Innenschulter (27) ist, und größer als der maximale Durchmesser (d2, d4) jeweils der zweiten und vierten Innenschulter (25, 29).

8. Großwälzlager (1) nach einem der vorstehenden Ansprüche,
**dadurch gekennzeichnet, dass** der minimale Durchmesser (D2) der zweiten Außenschulter (33) gleich dem minimalen Durchmesser (D4) der vierten Außenschulter (37) ist, und geringer als der minimale Durchmesser (D1, D3) jeweils der ersten und dritten Außenschulter (31, 35).

9. Großwälzlager (1) nach einem der vorstehenden Ansprüche,
**dadurch gekennzeichnet, dass** die Kugeln (23) der ersten Kugelreihe (K1) entlang des ersten Laufkreisdurchmessers (DL1) angeordnet sind und die Kugeln (24) der zweiten Kugelreihe (K2) entlang eines zweiten Laufkreisdurchmessers (DL2) angeordnet sind, welcher von dem Durchmesser (DL1) der ersten Kugelreihe (K1) verschieden ist.

10. Großwälzlager (1) nach Anspruch 9,
**dadurch gekennzeichnet, dass** der maximale Durchmesser (d1) der ersten Innenschulter (23) größer ist als der maximale Durchmesser (d2) der zweiten Innenschulter (25), und der maximale Durchmesser (d3) der dritten Innenschulter (27) größer ist als der maximale Durchmesser (d4) der vierten Innenschulter (29).

11. Großwälzlager (1) nach Anspruch 9 oder 10,
**dadurch gekennzeichnet, dass** der minimale Durchmesser (D4) der vierten Außenschulter (37) geringer ist als der minimale Durchmesser (D3) der dritten Außenschulter (35), und der minimale Durchmesser (D2) der zweiten Außenschulter (33) geringer ist als der minimale Durchmesser (D1) der ersten Außenschulter (31).

12. Großwälzlager (1) nach einem der vorstehenden Ansprüche,
**dadurch gekennzeichnet, dass** die erste Kugelreihe (K1) aus Kugeln (23) mit einem ersten Kugeldurchmesser besteht, und die zweite Kugelreihe (K2) aus Kugeln (24) mit einem zweiten Kugeldurchmesser besteht, welcher von dem ersten Kugeldurchmesser verschieden ist.

13. Großwälzlager (1) nach einem der vorstehenden Ansprüche,
**dadurch gekennzeichnet, dass** das Großwälzlager (1) eine oder mehrere weitere Kugelreihen aufweist, wobei die eine oder die mehreren Kugelreihen axial zueinander beabstandet jeweils in einer Vierpunktlagerung angeordnet sind, wobei jeweils einer Kugelreihe vier Laufbahnabschnitte zugeordnet sind, die jeweils eine Fläche zur Aufnahme der Kugellaufbahn aufweisen, und wobei die Fläche jeweils eines in den Innenring vorgesehenen Laufbahnabschnitts größer als die Fläche des jeweils benachbarten, in dem Innenring vorgesehenen Laufbahnabschnitts ist und gleich der Fläche des jeweils diametral gegenüberliegenden in dem Außenring vorsehenden Laufbahnabschnitts ist.

14. Windenergieanlage, mit
einem Turm, der einen Turmkopf aufweist, und einer Gondel, welche zur Aufnahme eines Rotors eingerichtet ist, wobei die Gondel mittels eines Azimutlagers relativ zu dem Turm drehbar gelagert ist,
**dadurch gekennzeichnet, dass** das Azimutlager als ein Großwälzlager (1) nach einem der Ansprüche 1 bis 13 ausgebildet ist.

## Claims

1. Large roller bearing (1) which is constructed as a multi-row ball bearing slewing rim for receiving axial loads, radial loads and tilting torques, having an outer ring (5), an inner ring (3), a first ball row (K1) and a second ball row (K2), wherein the first ball row (K1) and the second ball row (K2) are arranged so as to be axially spaced apart with respect to each other in a four-point bearing, there being associated with the first ball row four race portions (7, 9, 15, 17) and with the second ball row four race portions (11, 13, 19, 21) which each have a face for receiving the ball race, wherein the face of a race portion (7, 11) provided in the inner ring is greater than the face of the adjacent race portion (9, 13) provided in the inner ring, respectively, and equal to the face of the race portion (17, 21) which is provided diametrically opposite in the outer ring, respectively;
- the inner ring (3) for the first ball row (KI) has an annular first inner Shoulder (23) and an annular second inner Shoulder (25) which each delimit one of the faces for receiving a ball race of the first ball row (K1), and the inner ring (3) for the second ball row (K2) has an annular third inner Shoulder (27) and an annular fourth inner Shoulder (29) which each delimit one of the faces for receiving the ball race of the second ball row (K2), wherein a maximum diameter (d4) of the fourth inner Shoulder (29) is different from a maximum diameter (dI) of the first inner Shoulder (23),
**characterized in that** the maximum diameter (d3) of the third inner Shoulder (27) is different from the maximum diameter (d2) of the second inner Shoulder (25) and/or,
- the outer ring (5) for the first ball row (K1) has a first annular outer Shoulder (31) and a second annular outer Shoulder (33) which each delimit one of the faces for receiving the ball races of the first ball row (K1), and the outer ring (5) for the second ball row (K2) has a third annular outer Shoulder (35) and a fourth annular outer Shoulder (37) which each delimit one of the faces for receiving the ball races of the second ball row (K2), wherein the minimum diameter (D4) of the fourth outer Shoulder (37) is different from the minimum diameter (DI) of the first outer Shoulder (31),
**characterized in that** the minimum diameter (D3) of the third outer Shoulder (35) is different from the minimum diameter (D2) of the second outer Shoulder (33).

2. Large roller bearing (1) according to claim 1, **characterized in that** the face of the race portion (9, 13) provided in the inner ring (3) is equal to the face of the race portion (15, 19) which is provided diametrically opposite in the outer ring (5), respectively.

3. Large roller bearing (1) according to any one of the preceding Claims, **characterized in that** the largest of the maximum diameters (d1, d2, d3, d4) of the inner Shoulders (23, 25, 27, 29) is smaller than or equal to the smallest of the minimal diameters (D1, D2, D3, D4) of the outer Shoulders (31, 33, 35, 37).

4. Large roller bearing (1) according to any one of the preceding Claims, **characterized in that** the balls (23) of the first ball row (K1) and the balls (24) of the second ball row (K2) are arranged along a first race circle diameter (DL1).

5. Large roller bearing (1) according to claim 4, **characterized in that** the largest of the maximum diameters (d1, d2, d3, d4) of the inner Shoulders (23, 25, 27, 29) is equal to or in a range up to 0.5 mm below the first race circle diameter (DL1) of the first and second ball row.

6. Large roller bearing (1) according to claim 4 or 5, **characterized in that** the smallest of the minimum diameters (D1, D2, D3, D4) of the outer Shoulders (31, 33, 35, 37) is equal to or in a range up to 0.5 mm above the first race circle diameter (DL1) of the first and second ball row.

7. Large roller bearing (1) according to claim 5 or 6, **characterized in that** the maximum diameter (d1) of the first inner Shoulder (23) is equal to the maximum diameter (d3) of the third inner Shoulder (27), and greater than the maximum diameter (d2, d4) of the second and fourth inner Shoulder (25, 29), respectively.

8. Large roller bearing (1) according to any one of the preceding Claims, **characterized in that** the minimum diameter (D2) of the second outer Shoulder (33) is equal to the minimum diameter (D4) of the fourth outer Shoulder (37), and smaller than the minimum diameter (DI, D3) of the first and third outer Shoulder (31, 35), respectively.

9. Large roller bearing (1) according to any one of the preceding Claims, **characterized in that** the balls (23) of the first ball row (K1) are arranged along the first race circle diameter (DL1) and the balls (24) of the second ball row (K2) are arranged along a second race circle diameter (DL2), which is different from the diameter (DL1) of the first ball row (K1).

10. Large roller bearing (1) according to claim 9, **characterized in that** the maximum diameter (d1) of the first inner Shoulder (23) is greater than the maximum diameter (d2) of the second inner Shoulder (25), and the maximum diameter (d3) of the third inner Shoulder (27) is greater than the maximum diameter (d4) of the fourth inner Shoulder (29).

11. Large roller bearing (1) according to claim 9 or claim 10, **characterized in that** the minimum diameter (D4) of the fourth outer Shoulder (37) is smaller than the minimum diameter (D3) of the third outer Shoulder (35), and the minimum diameter (D2) of the second outer Shoulder (33) is smaller than the minimum diameter (D1) of the first outer Shoulder (31).

12. Large roller bearing (1) according to any one of the preceding Claims, **characterized in that** the first ball row (K1) comprises balls (23) having a first ball diameter, and the second ball row (K2) comprises balls (24) having a second ball diameter which is different from the first ball diameter.

13. Large roller bearing (1) according to any one of the preceding Claims, **characterized in that** the large roller bearing (1) has one or more additional ball rows, the one or more ball rows being arranged with axial spacing from each other in a four-point bearing, there being associated with a ball row four race portions which each have a face for receiving the ball race, and the face of a race portion provided in the inner ring being greater than the face of the adjacent race portion provided in the inner ring and equal to the face of the diametrically opposite race portion which is provided in the outer ring.

14. Wind turbine having a tower which has a tower head and a pod which is configured to receive a rotor, the pod being rotatably supported relative to the tower by means of an azimuth bearing, **characterized in that** the azimuth bearing is constructed as a large roller bearing (1) according to any one of Claims 1 to 13.

## Revendications

1. Couronne d'orientation (1), qui est réalisée sous la forme d'un raccordement rotatif à plusieurs rangées de billes servant à recevoir des charges axiales, des charges radiales et des couples de basculement, comprenant une bague extérieure (5), une bague intérieure (3), une première rangée de billes (K1) et une deuxième rangée de billes (K2), sachant que la première rangée de billes (K1) et la deuxième rangée de billes (K2) sont disposées de manière espacée l'une de l'autre axialement respectivement dans un palier de support ä quatre points, sachant que quatre tronçons de voie de roulement (7, 9, 15, 17) sont associes ä la première rangée de billes et que quatre tronçons de voie de roulement (11, 13, 19, 21) sont associes ä la deuxième rangée de billes, lesquels présentent respectivement une surface servant ä recevoir la voie de roulement des billes,
lesquels la surface respectivement d'un tronçon de voie de roulement (7, 11) prévu dans la bague intérieure est plus grande que la surface du tronçon de voie de roulement (9, 13) respectivement adjacent, prévu dans la bague intérieure, et en ce qu'elle est égale à la surface du tronçon de voie de roulement (17, 21) respectivement diamétralement opposé, prévu dans la bague extérieure;
- la bague intérieure (3) pour la première rangée de billes (K1) présente un premier épaulement intérieur (23) de forme annulaire et un deuxième épaulement intérieur (25) de forme annulaire, lesquels délimitent respectivement une des surfaces servant à recevoir une voie de roulement de billes de la première rangée de billes (K1), et en ce que la bague intérieure (3) pour la deuxième rangée de billes (K2) présente un troisième épaulement intérieur (27) de forme annulaire et un quatrième épaulement intérieur (29) de forme annulaire, lesquels délimitent respectivement une des surfaces servant à recevoir la voie de roulement de billes de la deuxième rangée de billes (K2), sachant qu'un diamètre maximal (d4) du quatrième épaulement intérieur (29) est différent d'un diamètre maximal (d1) du premier épaulement intérieur (23),
**caractérisée en ce que** le diamètre maximal (d3) du troisième épaulement intérieur (27) est différent du diamètre maximal (d2) du deuxième épaulement intérieur (25), et/ou
- la bague extérieure (5) pour la première rangée de billes (K1) présente un premier épaulement extérieur (31) de forme annulaire et un deuxième épaulement extérieur (33) de forme annulaire, lesquels délimitent respectivement une des surfaces servant à recevoir les voies de roulement de billes de la première rangée de billes (K1), et **en ce que** la bague extérieure (5) pour la deuxième rangée de billes (K2) présente un troisième épaulement extérieur (35) de forme annulaire et un quatrième épaulement extérieur (37) de forme annulaire, lesquels délimitent respectivement une des surfaces servant à recevoir les voies de roulement de billes de la deuxième rangée de billes (K2), sachant que le diamètre minimal (D4) du quatrième épaulement extérieur (37) est différent du diamètre minimal (D1) du premier épaulement extérieur (31),
**caractérisée en ce que** le diamètre minimal (D3) du troisième épaulement extérieur (35) est différent du diamètre minimal (D2) du deuxième épaulement extérieur (33).

2. Couronne d'orientation (1) selon la revendication 1,
**caractérisée en ce que** la surface du tronçon de voie de roulement (9, 13) prévu dans la bague intérieure (3) est égale à la surface du tronçon de voie de roulement (15, 19) respectivement diamétralement opposé prévu dans la bague extérieure (5)

3. Couronne d'orientation (1) selon l'une des revendications précédentes,
**caractérisée en ce que** le plus grand des diamètres maximaux (d1, d2, d3, d4) des épaulements intérieurs (23, 25, 27, 29) est inférieur ou égal au plus petit des diamètres minimaux (D1, D2, D3, D4) des épaulements extérieurs (31, 33, 35, 37).

4. Couronne d'orientation (1) selon l'une des revendications précédentes,
**caractérisée en ce que** les billes (23) de la première rangée de billes (K1) et les billes (24) de la deuxième rangée de billes (K2) sont disposées le long d'un premier 30 diamètre de circuit de roulement (DL1).

5. Couronne d'orientation (1) selon la revendication 4,
**caractérisée en ce que** le plus grand des diamètres maximaux (d1, d2, d3, d4) des épaulements intérieurs (23, 25, 27, 29) est egal ou se situe dans une plage allant jusqu'à 0,5 mm en dessous du premier diamètre de circuit de roulement (DL1) de la première et de la deuxième rangée de billes.

6. Couronne d'orientation (1) selon la revendication 4 ou 5,
**caractérisée en ce que** le plus petit des diamètres minimaux (DI, D2, D3, D4) des épaulements extérieurs (31, 33, 35, 37) est egal ou se situe dans une plage allant jusqu'à 0,5 mm au-dessus du premier diamètre de circuit de roulement (DL1) de la première et de la deuxième rangée de billes.

7. Couronne d'orientation (1) selon la revendication 5 ou 6,
**caractérisée en ce que** le diamètre maximal (d1) du premier épaulement intérieur (23) est égal au diamètre maximal (d3) du troisième épaulement intérieur (27), et est plus grand que le diamètre maximal (d2, d4) respectivement du deuxième et du quatrième épaulement intérieur (25, 29).

8. Couronne d'orientation (1) selon l'une des revendications précédentes,
**caractérisée en ce que** le diamètre minimal (D2) du deuxième épaulement extérieur (33) est égal au diamètre minimal (D4) du quatrième épaulement extérieur (37) et est inférieur au diamètre minimal (D1, D3) respectivement du premier et du troisième épaulement extérieur (31, 35).

9. Couronne d'orientation (1) selon l'une des revendications précédentes,
**caractérisée en ce que** les billes (23) de la première rangée de billes (K1) sont disposées le long du premier diamètre de circuit de roulement (DL1), et **en ce que** les billes (24) de la deuxième rangée de bille (K2) sont disposées le long d'un deuxième diamètre de circuit de roulement (DL2), lequel est different du diamètre (DL1) de la premiere rangée de billes (K1).

10. Couronne d'orientation (1) selon la revendication 19,
**caractérisée en ce que** le diamètre maximal (dI) du premier épaulement intérieur (23) est plus grand que le diamètre maximal (d2) du deuxième épaulement intérieur (25), et **en ce que** le diamètre maximal (d3) du troisième épaulement intérieur (27) est plus grand que le diamètre maximal (d4) du quatrième épaulement intérieur (29).

11. Couronne d'orientation (1) selon la revendication 9 ou 10,
**caractérisée en ce que** le diamètre minimal (D 4) du quatrième épaulement extérieur (37) est plus petit que le diamètre minimal (D3) du troisième épaulement extérieur (35), et **en ce que** le diamètre minimal (D2) du deuxième épaulement extérieur (33) est inférieur au diamètre minimal (D1) du premier épaulement extérieur (31).

12. Couronne d'orientation (1) selon l'une des revendications précédentes,
**caractérisée en ce que** la première rangée de billes (K1) est constituée de billes (23) présentant un premier diamètre de bille, et **en ce que** la deuxième rangée de billes (K2) est constituée de billes (24) présentant un deuxième diamètre de bille, qui est différent du premier diamètre de bille.

13. Couronne d'orientation (1) selon l'une des revendications précédentes,
**caractérisée en ce que** la couronne d'orientation (1) présente une ou plusieurs autres rangées de billes, sachant que les une ou plusieurs rangées de billes sont disposées, de manière espacée les unes des autres axialement, respectivement dans un palier de Support à quatre points, sachant que quatre tronçons de voie de roulement sont associes ä respectivement une rangée de billes, lesquels présentent respectivement une surface servant à recevoir la voie de roulement de bille, et sachant que la surface respectivement d'un tronçon de voie de roulement prévu dans la bague intérieure est plus grande que la surface du tronçon de voie de roulement respectivement adjacent, prévu dans la bague intérieure et est égale à la surface du tronçon de voie de roulement respectivement diamétralement opposé prévu dans la bague extérieure.

14. Eolienne, comprenant une tour, qui présente une tête de tour, et une nacelle, qui est mise en place afin de recevoir un rotor, sachant que la nacelle est montée de manière ä pouvoir tourner par rapport ä la tour au moyen d'un palier azimutal,
**caractérisée en ce que** le palier azimutal est réalisé sous la forme d'une couronne d'orientation (1) selon l'une quelconque des revendications 1 à 13.
